# EUROPÄISCHE PATENTANMELDUNG

(11) **EP 0 927 703 A2**
(43) Veröffentlichungstag der Anmeldung: **07.07.1999**
(21) Anmeldenummer: 98124831.3
(22) Anmeldetag: 29.12.1998
(51) Int. Cl.: C02F 11/12

(54) **Verfahren und Vorrichtung zur Dehydratation und Trocknung von Feststoff-Flüssigkeitsgemischen**

(30) Priorität: 30.12.1997 DE 19758184
(71) Anmelder: Gürth, Gisbert, Dr., 22927 Grosshansdorf (DE)
(72) Erfinder: Gürth, Gisbert, Dr., 22927 Grosshansdorf (DE)
(74) Vertreter: Mey, Klaus-Peter, Dr.-Ing. Dipl.-Wirtsch.-Ing.

(57) **Zusammenfassung**

Um bei der Trocknung von Feststoff-Flüssigkeitsgemischen (Schlämme), insbesondere von Abfallschlämmen mit hohem Wassergehalt mit/ohne Schadstoffgehalt oder bei der Einengung von Lösungen zur Gewinnung von beispielsweise Salzen oder Zucker sowie bei der Verdampfung von verunreinigten Lösungsmittel zur Gewinnung von beispielsweise Trinkwasser in einem indirekt beheizten Trocknungsreaktor (4) den Wärmeinhalt der erhaltenen Trocknungsbrüden optimal zur Beheizung des Trocknungsreaktors (4) zu nutzen, wird erfindungsgemäß vorgeschlagen, eine Verdichtung der Trocknerbrüden und/oder des Dampfes eines Heiz-Kühlkreislaufs (18, 18') durchzuführen. Durch anschließende Kondensation und Entspannung der vorher verdichteten Dämpfe wird es möglich, die gesamte zur Trocknung aufgebrachte Verdampfungsenthalpie zur Aufheizung des Trockengutes zu nutzen.

## Beschreibung

Die Erfindung betrifft ein Verfahren und eine Vorrichtung zur Dehydratation und Trocknung von Feststoff-Flüssigkeitsgemischen (Schlämmen), insbesondere von Abfallschlämmen mit hohem Wassergehalt mit/ohne Schadstoffgehalt, sowie zur Einengung von Lösungen wie Sole- oder Zuckerlösungen bis zur Kristallisation mit dem Ziel der primären Gewinnung der Feststoffe durch Verdampfung des Lösungsmittels und zur Verdampfung von verunreinigten Lösungen mit anschließender Kondensation zur primären Gewinnung des Lösungsmittels z. B. Wasser bei Entsalzungsanlagen, in einem indirekt beheizten Trocknungsreaktor mit Rückführung der Abwärme der Trocknungsgase (Brüden) zur Beheizung des Trocknungsreaktors mit Hilfe eines Kondensators (Wärmetauschers) und eines geschlossenen Heiz-Kühlkreislaufs zwischen dem Wärmetauscher und dem Trocknungsreaktor.

Die Trocknung von Schlämmen - oft als Vorstufe einer nachfolgenden Verbrennung oder als Endstufe für eine Deponielagerung der erhaltenen Trockenstoffe erforderlich - ist hinsichtlich der Verdampfung der Flüssigkeit und der oftmals starken Geruchsbelästigung durch die verdampfte Flüssigkeit (Trocknerbrüden) nur mit einem entsprechend hohen apparativen und Energie- Aufwand durchzuführen.

Es empfiehlt sich, falls dies möglich ist, die Trocknung so schonend wie möglich durchzuführen, um möglichst eine Verdampfung oder Zersetzung der Trockenstoffe zu vermeiden und um möglichst unterhalb der Siede- oder Schmelztemperaturen der Trockenstoffe bei der Trocknung zu bleiben.

Um der Forderung nach einer schonenden Trocknung zu entsprechen, verbietet sich die direkte Beheizung des Trocknungsreaktors, beispielsweise durch Eindringen von Verbrennungsgasen eines Heißgaserzeugers, da hierdurch unerwünschte Temperaturspitzen am Trockengut auftreten können. Durchgesetzt haben sich deshalb in diesen Fällen der Einsatz von indirekt beheizten Trocknungsreaktoren, bei denen beispielsweise die Beheizung mittels eines Heizfluids über einen Doppelmantel des Reaktorgehäuses erfolgt.

So wird in der DE 44 27 236 C2 ein Verfahren und eine Vorrichtung zur Trocknung von Schlämmen beschrieben mit einem Trocknungsreaktor, der einen doppelwandigen Heizmantel aufweist. Der Trocknungsreaktor ist dabei als halbzylindrische Wanne ausgebildet und mittels einer Befeuerungseinrichtung direkt und/oder mit der Abwärme eines Kondensators bzw. der Befeuerungseinrichtung indirekt aufheizbar.

Zur kostengünstigeren Herstellung des dort dargestellten Reaktors erweisen sich herkömmliche Rohre, die auf Reaktorlänge zugeschnitten und mit Distanzstäben ineinander geschoben werden. Verbunden werden die Rohre durch an den Enden aufgeschweißte Flanschverbindungen, die gleichzeitig die Enddeckel mit den Lagern für die Krählwerkswelle aufnehmen.

Weitere Verbindungen zwischen dem Doppelrohr bilden der Ein- und Austrag, sowie ggf- eingebrachte Beobachtungsdurchbrüche.

Die in diesem Trockner anfallenden Trocknungsabgase (Trocknerbrüden) werden in einen Kondensator geführt, dessen Abwärme dann zur Aufheizung des Trocknungsreaktors benutzt wird. Eine Fremdheizung ist dabei auf jeden Fall erforderlich, da Wärmeverluste durch den Wärmeinhalt des abgeführten Trockengutes und des abgeführten Kondensats ausgeglichen werden müssen. Die direkte Fremdbeheizung führt dabei nachteilig zu einer Erhöhung der Trocknerabgasmenge und zu Bestandteilen im Abgasstrom, die nicht auskondensiert werden können. Da dieser verbleibende, nicht kondensierbare Anteil bei Austritt aus der Trocknungsanlage zu einer erheblichen Geruchsbelästigung führen würde, müssen diese Abgase über entsprechende Reinigungsanlagen, wie beispielsweise Aktivkohlefilter, Nasswäscher usw. geführt werden.

Ausgehend von diesem bekannten Stand der Technik ist es Aufgabe der Erfindung, bekannte Trocknungsverfahren und Trocknungsvorrichtungen, wie sie beispielsweise in der DE 44 27 236 C2 beschrieben sind, weiter auszubilden, um die geschilderten Nachteile einer Gasreinigung zu vermeiden und um mit möglichst geringem Energieaufwand eine Trocknung von Schlämmen durchführen zu können.

Die gestellte Aufgabe zur Dehydratation und Trocknung von Feststoff-Flüssigkeitsgemischen (Schlämmen), insbesondere von Abfallschlämmen mit hohem Wassergehalt mit/ohne Schadstoffgehalt in einer Trocknungsanlage der vorgenannten Gattung wird verfahrensmäßig mit den kennzeichnenden Maßnahmen des Anspruchs 1 dadurch gelöst, dass zur Optimierung der Wärmerückführung die Trocknerbrüden (Trocknungsgase) und/oder die im Wärmetauscher verdampfte Flüssigkeit des Heiz-Kühlkreislaufs mittels eines Verdichters auf einen erhöhten Druck von bis zu 2,0 bar, vorzugsweise auf bis zu 1,3 bar verdichtet werden und anschließend bei der Kondensation und Entspannung der Trocknerbrüden im Wärmetauscher und/oder der verdampften Flüssigkeit des Heiz-Kühlkreislaufs im Doppelmantel des Trocknungsreaktors die bei der Trocknung der Schlämme gesamte aufgebrachte Vedampfungsenthalpie zurückgewonnen und zur Aufheizung des Trockengutes und des Trocknungsreaktors genutzt werden.

Vorteilhafte Ausgestaltungen der Erfindung, insbesondere eine Vorrichtung zur Durchführung des erfindungsgemäßen Verfahrens sind in den Unteransprüchen angegeben.

Durch die Maßnahme der Erfindung ergibt sich zunächst ein geschlossener Kreislauf (Heiz-Kühlkreislauf) zwischen dem Trocknungsreaktor, einem Wärmetauscher und einem Verdichter mit den Verfahrensschritten Aufheizung, Verdampfung und Verdichtung einer Flüssigkeit und anschließender Entspannung und Kondensation der verdampften und verdichteten Flüssigkeit im Doppelmantel des Trocknungsreaktors und Abgabe der dabei frei werdenden Wärme an die zu trocknenden Schlämme.

Als Flüssigkeiten für den Heiz-Kühlkreislauf eignen sich alle Flüssigkeiten, Flüssigkeitsmischungen, Kältemittel und Kältemittelmischungen, die aufgrund ihrer Siedepunkte eine Trocknungstemperatur zwischen 20 bis 120 °C ermöglichen und einstellbar machen. Beispielhaft sind hier zu nennen: Wasser / Ammoniak, Wasser / Lithiumbromid, Wasser / Ethylalkohol, Wasser / Ethylether, Trichlorfluormethan, etc.. Zur genauen Einstellung der Trocknungstemperatur kann neben der Einstellung des Mischungsverhältnisses des Kältemittels auch die Anhebung oder Absenkung der Siedetemperatur durch Anhebung oder Absenkung der Druckverhältnisse im Heiz-Kühlkreislauf erfolgen. Bei explosionsgefährdeten Flüssigkeiten oder Flüssigkeitsmischungen sind die vorgeschriebenen Schutzmaßnahmen (Explosionsschutz) vorzunehmen. Bei einer wirtschaftlichen Trocknung, die - falls das zu trocknende Gut dies zulässt, - bei etwa 100 °C erfolgen sollte, ist besonders Wasser als eine stets verfügbare und billige Flüssigkeit besonders gut geeignet.

Bei Trocknungstemperaturen, die unterhalb von 100 °C liegen, haben sich als Flüssigkeit für den Heiz-Kühlkreislauf besonders Mischungen aus Wasser und Alkohol bzw. Ether sowie andere mit Wasser mischbare Flüssigkeiten, womit beliebig erforderliche Trocknungstemperaturen leicht einstellbar sind, als besonders geeignet bewährt.

Die aus dem Trocknungsreaktor austretenden Trocknerbrüden kondensieren in einem Wärmetauscher, wobei die hierbei frei werdende Wärme zur Aufheizung und Verdampfung der Flüssigkeit des Heiz-Kühlkreislaufs genutzt wird.

Vor dem Eintrag der Trocknerbrüden in den Wärmetauscher kann durch Verdichtung der Brüden, beispielsweise durch einen handelsüblichen Verdichter, vorzugsweise einen für die geforderten Temperaturen ausgelegten Schrauben-, Kolben-, oder Wälzkolbenverdichter, der Wärmeinhalt der Brüden gesteigert werden, so dass eine noch weitergehende Aufheizung und Verdampfung der Flüssigkeit des Heiz-Kühlkreislaufs möglich wird. Diese Steigerung der Aufheizung durch die vorhergehende Brüdenkompression kann dabei so weit gehen, dass auf eine Verdichtung der verdampften Flüssigkeit des Heiz-Kühlkreislaufs mittels eines Verdichters verzichtet werden kann.

Da bei entsprechender Verdichtung die Temperatur des Dampfes auf Temperaturen (oberhalb 150 °C) ansteigt, deren Beherrschung technisch aufwendig ist, soll in vorteilhafter Ausgestaltung dieser Erfindung während des Verdichtungsprozesses in den Zylinder kaltes Wasser eingespritzt werden, so dass einerseits eine Temperatur von 150 bis 160 °C nicht überschritten wird, andererseits durch die Zunahme der Menge an überhitztem Dampf der Wärmebedarf des gesamten Prozesses gedeckt werden kann. Die bei der Verdichtung erzeugte Temperatur muss demnach nur danach ausgelegt werden, dass der Gesamtprozess nach dem 2. Hauptsatz der Thermodynamik ablaufen kann, während über die erzeugte zusätzliche Dampfmenge (bei 150 bis 160 °C) die anfallenden Wärmeverluste idealerweise vollständig gedeckt werden können, so dass eine weitere Wärmezufuhr während des Prozesses entbehrlich wird.

Für die Einleitung des Prozesses erfolgt erfindungsgemäß eine weitere Wärmeeinleitung in den Heiz-Kühlkreislauf durch eine zusätzliche Heizung, die falls dies erforderlich ist - auch zur Deckung von Wärmeverlusten während des Prozesses herangezogen werden kann. Hierzu wird eine Teilmenge der Flüssigkeit an einer geeigneten Stelle, an der mit Sicherheit Flüssigkeit vorliegt, entnommen, aufgeheizt und in den Heiz-Kühlkreislauf zurückgeführt.

Die Heizung des Trocknungsreaktors erfolgt ausschließlich indirekt und somit bestehen die Trocknerbrüden ausschließlich aus verdampften Stoffen, in der Hauptsache aus verdampfter Flüssigkeit der in den Trocknungsreaktor eingetragenen Schlämme. Durch diese Zusammensetzung der Trocknerbrüden aus ausschließlich bei Trocknungstemperatur verdampften Stoffen findet beim nachfolgenden Eintrag der Trocknerbrüden in den Wärmetauscher eine vollständige Kondensation statt, so dass keine unkondensierten Bestandteile kostenaufwendig anderweitig entsorgt werden müssen.

Das Kondensat, das bei seinem Austritt aus dem Wärmetauscher noch über einen nutzbaren Wärmeinhalt verfügt, wird anschließend zur Aufwärmung der in den Trockner einzutragenden Schlämme in einem entsprechend ausgebildeten weiteren Wärmetauscher genutzt, bevor es aus der Trocknungsanlage ausgeschleust wird.

Eine Vorrichtung zur Durchführung des Verfahrens der Erfindung besteht aus einem Trocknungsreaktor mit einem aufheizbaren Doppelmantel, der in einem geschlossenen Heiz-Kühlkreislauf mit einem Wärmetauscher verbunden ist, wobei zwischen Wärmetauscher und Trocknungsreaktor ein Verdichter zur Kompression der im Wärmetauscher verdampften Flüssigkeit des Heiz-Kühlkreislaufs angeordnet werden kann. Weiterhin ist der Trocknungsreaktor mit einer Brüdenleitung verbunden, durch die die im Trocknungsreaktor durch Verdampfung frei werdenden Brüden aus dem Trockner entfernt und mit Hilfe eines Gebläses oder eines Verdichters in einem Wärmetauscher geführt werden. Der Teil der Brüdenleitung bzw. der Heiz-Kühlkreislaufleitung, in die jeweils ein Verdichter verdichteten Dampf einspeist, sind jeweils druckfest ausgelegt.

Für den Fall, dass es zum Beispiel aus Gründen einer besseren Regelbarkeit sich als vorteilhaft erweist, die prozessbedingten Wärmeverluste nicht ausschließlich über den Brüdenverdichter mit Wassereinspritzung zu decken, ist erfindungsgemäß in der Trocknungsanlage eine Heizung installiert, mit der eine Teilmenge der Flüssigkeit des Heiz-Kühlkreislauf aufgeheizt werden kann.

Weiterhin ist zur vollständigen Nutzung der noch in den kondensierten Brüden enthaltenen Wärme dem Trocknungsreaktor ein Wärmetauscher vorgeschaltet, in dem die zu trocknenden Schlämme durch das noch warme Kondensat aufgeheizt werden.

Da die Kondensation des überhitzten Dampfes nach der Brüdenverdichtung mit Wassereinspritzung bei einer höheren Temperatur (ca. 110 bis 120 °C), erfolgen muss als der erzeugte Dampf des Heiz-Kühlkreislaufes aufweist, ist der Wirkungsgrad des Schlammwärmetauschers bei dieser Ausgestaltung der Erfindung besonders günstig.

Ein wesentlicher Vorteil des hier aufgezeigten Verfahrens liegt gegenüber herkömmlichen bekannten Trocknungsverfahren darin, dass die aufzubringende Verdampfungsenthalpie des dem zu trocknenden Gutes zu entziehenden Wassers vollständig zurückgewonnen und dem Trocknungsprozess wieder zugeführt wird. Ein weiterer Vorteil wird dadurch erzielt, dass ein handelsüblicher Verdichter als Dampfüberhitzer eingesetzt wird. Durch diese vorteilhaften Umstände sind, je nach Wärmeisolation der Anlage, pro eintausend Liter Wasserentzug nur 60 kW bis 95 kW an thermischer Energie aufzubringen. Dies sind nur 10 bis 15 % des Energiebedarfs herkömmlicher Trocknungsanlagen ohne Wärmerückgewinnung.

Weitere Vorteile, Merkmale und Einzelheiten der Erfindung werden nachfolgend an zwei in schematischen Zeichnungsfiguren dargestellten Ausführungsbeispielen näher erläutert.

Es zeigen:
- Fig. 1: ein Schema der erfindungsgemäßen Vorrichtung mit Brüdenkompression,
- Fig. 2: ein Schema der erfindungsgemäßen Vorrichtung mit Kompression des Dampfes im Heiz-Kühlkreislauf.

In den beschriebenen Ausführungsbeispielen wird als Flüssigkeit für den Heiz-Kühlkreislauf Wasser verwendet, das infolge des hohen Siedepunktes auch eine hohe Trocknungstemperatur ermöglicht. Es sind aber auch andere Flüssigkeiten einsetzbar, deren Siedepunkte dann entsprechende Trocknungstemperaturen festlegen.

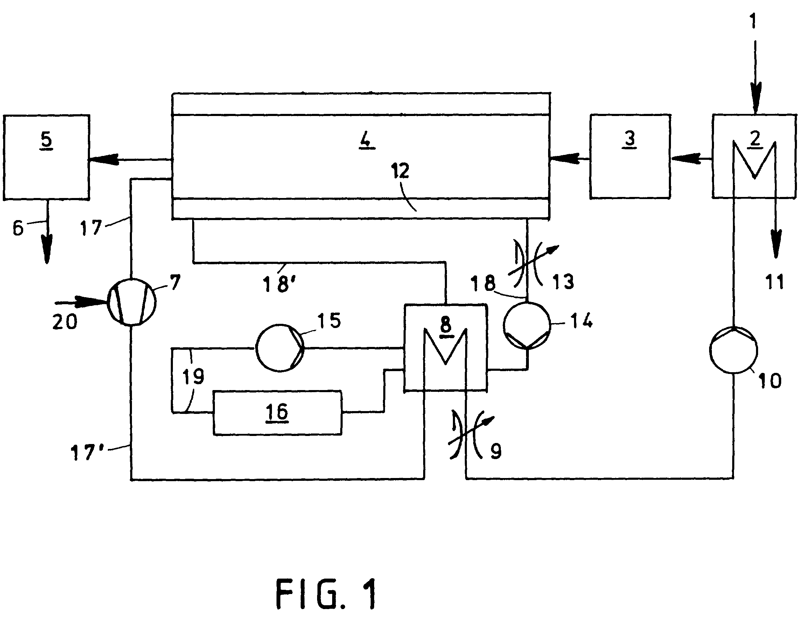

Im Ausführungsbeispiel der Figur 1 werden Schlämme bzw. das zu trocknende Gut (1) mit Hilfe eines dem Gut (1) angepassten Wärmetauschers (2) vorgewärmt und mit Hilfe einer Eintragsschleuse (3) in den Trocknungsreaktor (4) eingetragen.

In dem auf 107 °C aufgewärmten Trocknungsreaktor (4) wird das zu trocknende Gut (1) zur Austragsschleuse (5) hin gefördert, dabei getrocknet und als Trockengut (6) ausgetragen. Durch den Trocknungsvorgang wird dem zu trocknenden Gut (1) die zu verdampfende Flüssigkeit - in diesem Beispiel Wasser - bestimmungsgemäß durch Verdampfung entzogen. Der entstandene Nassdampf wird über eine Brüdenleitung (17) dem Trocknungsreaktor (4) entzogen und mit einem geeigneten Verdichter (7), vorzugsweise einem Schraubenverdichter, auf ca. 1,3 bis 2,0 bar absolut verdichtet, wobei er sich auf ca. 200 °C aufheizt.

Der überhitzte Sattdampf wird über die druckfeste Leitung (17') kontinuierlich einem Wärmetauscher (8), beispielsweise einem Schlangen- oder Rohrbündelwärmetauscher zugeführt, an dessen Ausgang ein Kondensat-Ableiter bzw. Kondensat-Stauer (9) angeordnet ist, durch den einerseits der Verdichterdruck aufgebaut und aufrecht erhalten wird und andererseits das Kondensat ablaufen kann.

Im Wärmetauscher (8) kondensiert der Dampf unter Abgabe seiner Verdampfungsenthalpie und verlässt den Kondensatableiter (9) als Wasser mit ca. 110 bis 120 °C. Mit Hilfe der Heizungspumpe (10) wird das Warmwasser in den Wärmetauscher (2) eingespeist, durch den die vorhandene Wärme des Kondensats bis zum Gleichgewicht an das vorzuwärmende, zu trocknende Gut (1) abgegeben wird. Danach verlässt das dem zu trocknenden Gut (1) entzogene Wasser (11) die Anlage.

Überwiegend durch die im Wärmetauscher (8) freigesetzte Verdampfungsenthalpie des aus dem zu trocknenden Gut (1) herrührenden Dampfes wird im Wärmetauscher (8) bei einer Temperatur von 107 °C und einem absoluten Druck von 1,3 bar, der dem Dampfdruck von Wasser bei 107 °C entspricht, Wasserdampf (Sattdampf) im Heiz-Kühlkreislauf (18, 18') erzeugt.

Dieser Dampf wird in den nachgeschalteten Doppelmantel (12) des Trocknungsreaktors (4) durch die druckfeste Leitung (18') eingeleitet und setzt dort seine Verdampfungsenthalpie frei und wärmt den Trocknungsreaktor (4) auf über 100 °C bei 1 bar absolut auf. An der kältesten Stelle des Doppelmantels (12) - dies ist die Eintragsseite des Trocknungsreaktors (4) - kondensiert dieser Dampf ganz oder teilweise. Der noch vorhandene restliche Dampf wird - wie auch das Kondensat - einer einstellbaren Drossel (13) zugeführt, durch die er sich auf ca. 1 bar entspannt, kondensiert und sich dabei auf ca. 99 °C abkühlt. Das gesamte Kondensat wird als Speisewasser zur Überwindung des Druckunterschiedes mit Hilfe der Pumpe 2 (14) dem Wärmetauscher (8) wieder zugeführt, wodurch der Kreislauf (18, 18') des "Kältemittels" Wasser geschlossen wird.

Für den Fall, dass durch die Kompressionsarbeit des Verdichters (7) unter Umständen mit zusätzlicher Einspritzung von Wassr (20) zur Kühlung und gleichzeitig Vergrößerung der Dampfmenge bei dem beschriebenen Beispiel nicht sämtliche Verluste gedeckt werden, die durch den Ablass des warmen Kondensats (11), des warmen Trockengutes (6) sowie an der wärmeisolierten Oberfläche der aufgezeigten Aggregate und den verbindenden Rohrleitungen entstehen, wird im Heiz-Kühlkreislauf (18, 18') des Wärmetauschers (8) an geeigneter tiefer Stelle, an der während des Prozesses mit Sicherheit Wasser vorliegt, eine elektrische Heizung angebracht. Alternativ kann auch mit einer weiteren Heizungspumpe (15) dem Wärmetauscher (8) an der tiefsten Stelle oder an einer anderen Stelle des Heiz-Kühlkreislaufs (18, 18') Wasser über die Leitung (19) über ein geregeltes Heizelement (16) geleitet und im geschlossenen Kreislauf dem Heiz-Kühlkreislauf (18, 18') wieder zugeführt werden.

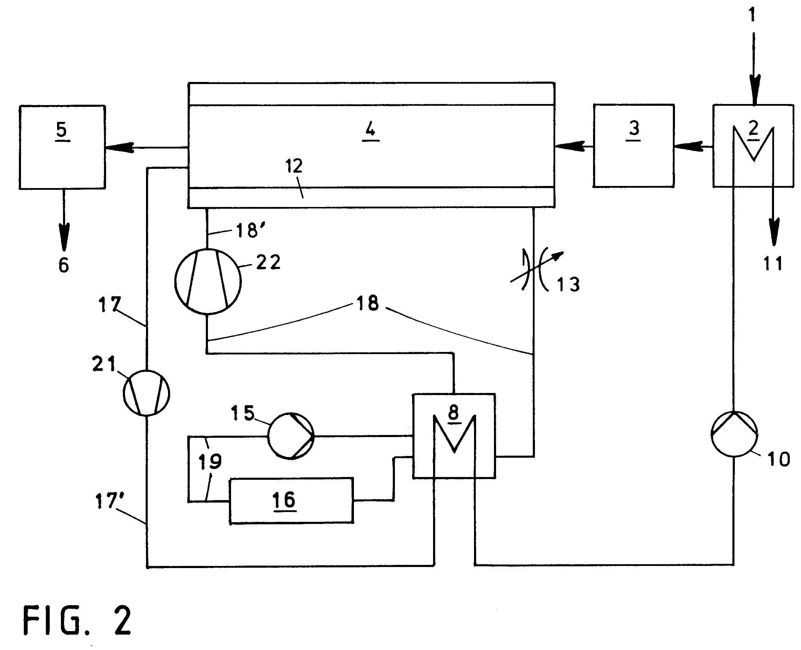

Das Ausführungsbeispiel der Figur 2 zeigt eine der Figur 1 entsprechende Trocknungsanlage mit der Änderung, dass keine Brüdenkompression durch einen Verdichter (7) stattfindet, sondern statt dessen eine Verdichtung der im Wärmetauscher (8) verdampften Flüssigkeit (Wasser) des Heiz-Kühlkreislaufs (18, 18'). Damit ergeben sich folgende Änderungen der Verfahrensparameter:

Im nun auf 100 °C aufgewärmten Trocknungsreaktor (4) wird das zu trocknende Gut (1) getrocknet. Der hierbei durch Verdampfung der Flüssigkeit (Wasser) erhaltene Dampf (Trocknerbrüden) wird über ein geeignetes Gebläse (20) dem Wärmetauscher (8) zugeführt, wo er kondensiert und als Wasser mit 99 °C den Wärmetauscher (8) verlässt.

Im Wärmetauscher (8) wird im Heiz-Kühlkreislauf (18, 18') bei einer Temperatur von 94 °C und einem absoluten Druck von 0,8 bar, der dem Dampfdruck von Wasser bei 94 °C entspricht, Wasserdampf erzeugt. Dieser Dampf wird durch den dem Wärmetauscher (8) nachgeschalteten Verdichter (22) auf 1,0 bar verdichtet, dabei von 94 °C auf 106 °C erwärmt und in den Doppelmantel (12) des Trocknungsreaktors (4) eingeleitet. An der kältesten Stelle des Doppelmantels (12) kondensiert dieser Dampf ganz oder teilweise, der noch vorhandene restliche Dampf wird gemeinsam mit dem Kondensat einer einstellbaren Drossel (13) zugeführt, hinter der der Dampf sich auf 0,8 bar entspannt, kondensiert und sich dabei auf 94 °C abkühlt. Das gesamte Kondensat wird als Speisewasser zum Wärmetauscher (8) zurückgeführt, wodurch auch hier der Kreislauf (18, 18') des "Kältemittels" Wasser geschlossen wird.

Wie die beiden angeführten Ausführungsbeispiele zeigen, ist es also möglich, durch entsprechende Verdichtung der Trocknungsbrüden und/oder einer Verdichtung des Dampfes im Heiz-Kühlkreislauf unterschiedliche Trocknungstemperaturen einzustellen. Erfindungsgemäß erweitert sich die Palette der einstellbaren Trocknungstemperaturen durch eine entsprechende Wahl einer Flüssigkeit mit einem geeigneten Siedepunkt für den Heiz-Kühlkreislauf.

## Patentansprüche

1. Verfahren zur Dehydratation und Trocknung von Feststoff-Flüssigkeitsgemischen (Schlämmen), insbesondere von Abfallschlämmen mit hohem Wassergehalt mit/ohne Schadstoffgehalt, sowie zur Einengung von Lösungen wie Sole- oder Zuckerlösungen bis zur Kristallisation mit dem Ziel der primären Gewinnung der Feststoffe durch Verdampfung der Lösungsmittel und zur Verdampfung von verunreinigten Lösungen mit anschließender Kondensation zur primären Gewinnung des Lösungsmittels, z. B. Wasser bei Entsalzungsanlagen, in einem indirekt beheiztem Trocknungsreaktor mit Rückführung der Abwärme der Trocknungsgase (Brüden) zur Beheizung des Trocknungsreaktors mit Hilfe eines Kondensators (Wärmetauschers) und eines geschlossenen Heiz-Kühlkreislaufs zwischen dem Wärmetauscher und dem Trocknungsreaktor, **dadurch gekennzeichnet**, dass zur Optimierung der Wärmerückführung die Trocknerbrüden (Trocknungsgase) und/oder die im Wärmetauscher (8) verdampfte Flüssigkeit des Heiz-Kühlkreislaufs (18, 18') mittels eines Verdichters (7, 22) auf einem erhöhten Druck von bis zu 2 bar, vorzugsweise auf bis zu 1,3 bar verdichtet werden und anschließend bei der Kondensation und Entspannung der Trocknerbrüden im Wärmetauscher (8) und/oder der verdampften Flüssigkeit des Heiz-Kühlkreislaufs (18, 18') im Doppelmantel (12) des Trocknungsreaktors (4) die gesamte bei der Trocknung der Schlämme aufgebrachte Verdampfungsenthalpie zur Aufheizung des Trockengutes und des Trocknungsreaktors genutzt werden.

2. Verfahren nach Anspruch 1, **dadurch gekennzeichnet**, dass die Flüssigkeiten des Heiz-Kühlkreislaufs (18, 18') aufgrund ihrer Siedepunkte so ausgewählt werden, dass eine Trocknungstemperatur im Bereich von 20 bis 120 °C ermöglicht wird.

3. Verfahren nach Anspruch 2, **dadurch gekennzeichnet**, dass die Flüssigkeit Wasser ist.

4. Verfahren nach Anspruch 2, **dadurch gekennzeichnet**, dass die Flüssigkeit eine Mischung aus Wasser und Kältemitteln ist.

5. Verfahren nach einem oder mehreren der vorhergehenden Ansprüche 1 bis 4, **dadurch gekennzeichnet**, dass an einer geeigneten Stelle des Heiz-Kühlkreislaufes (18, 18'), an der Flüssigkeit vorliegt, eine Teilmenge dieser Flüssigkeit dem Heiz-Kühlkreislauf (18, 18') entnommen, über eine Heizung (16) aufgeheizt und in den Heiz-Kühlkreislauf (18, 18') zurückgeführt wird.

6. Vorrichtung zur Dehydratation und Trocknung von Feststoff-Flüssigkeitsgemischen, insbesondere von industriellen Abfallschlämmen mit hohem Wassergehalt mit/ohne Schadstoffgehalt, insbesondere Vorrichtung zur Durchführung des Verfahrens nach einem oder mehreren der vorhergehenden Ansprüche, mit einem indirekt über einen Doppelmantel beheizten Trocknungsreaktor, gekennzeichnet durch
a) einen Heiz-Kühlkreislauf (18, 18'), der den Doppelmantel (12) des Trocknungsreaktors (4) mit einem Wärmetauscher (8) in einem geschlossenen Kreislauf verbindet, wobei der Heiz-Kühlkreislauf (18, 18'), und zwar dessen Zulaufleitung (18') vom Wärmetauscher (8) zum Doppelmantel (12) hin, so druckfest ausgestaltet ist, dass in diese Zulaufleitung (18') ein handelsüblicher Verdichter angeordnet werden kann,
b) einer Brüdenleitung (17, 17'), die den Innenraum des Trocknungsreaktors (4) mit dem Wärmetauscher (8) - Aufheizung des Heiz-Kühlkreislaufs (18, 18') - und mit einem zweiten Wärmetauscher (2) - Aufheizung des Trockengutes - verbindet, und einem handelsüblichen Verdichter, der in die Brüdenleitung (17, 17') vom Trocknungsreaktor (4) zum Wärmetauscher (8) hin angeordnet ist, wobei die Brüdenableitung (17') zwischen dem Verdichter (7) und dem Wärmetauscher (8) entsprechend druckfest ausgebildet ist.

7. Vorrichtung nach Anspruch 6, **dadurch gekennzeichnet**, dass der Heiz-Kühlkreislauf (18, 18') über eine Kreislaufleitung (19) mit einer Heizung (16) verbunden ist.

8. Vorrichtung nach Anspruch 6 oder 7, **dadurch gekennzeichnet**, dass der Verdichter (7, 22) ein handelsüblicher Schraubenverdichter ist.

9. Vorrichtung nach Anspruch 6 oder 7, **dadurch gekennzeichnet**, dass der Verdichter (7, 22) ein handelsüblicher Wälzkolbenverdichter ist.

10. Vorrichtung nach Anspruch 6 oder 7, **dadurch gekennzeichnet**, dass der Verdichter (7, 22) ein handelsüblicher Kolbenverdichter ist, der das Merkmal des Trockenlaufvermögens durch seine aus Polytetrafluorethylen (Teflon) gefertigten Kolbenringe aufweist.
